# EUROPÄISCHE PATENTSCHRIFT

(11) **EP 1 972 199 B1**
(45) Veröffentlichungstag und Bekanntmachung des Hinweises auf die Patenterteilung: **14.08.2013**
(21) Anmeldenummer: 08101702.2
(22) Anmeldetag: 18.02.2008
(51) Int. Cl.: A23J 1/10, C08L 89/06, C02F 11/14

(54) **Verfahren zum Entwässern von Gerbereiabfällen**
Method for removing water from tannery waste
Procédé destiné au drainage de déchets de tannerie

(30) Priorität: 10.03.2007 DE 102007011748
(43) Veröffentlichungstag der Anmeldung: 24.09.2008
(73) Patentinhaber: Messer Italia S.p.A., 10036 Settimo Torinese (TO) (IT)
(72) Erfinder: Galli, Leonardo, 50065, Pontassieve (IT)
(74) Vertreter: Münzel, Joachim R.

(56) Entgegenhaltungen:
- CA-A1- 1 116 765
- DE-A1- 10 100 260
- GB-A- 1 042 559
- GB-A- 1 313 550
- JP-A- 55 013 046
- US-A- 4 668 391
- US-A- 5 200 085

## Beschreibung

Die Erfindung betrifft ein Verfahren zum Entwässern von Gerbereiabfällen, insbesondere zum Entwässern von beim Entfleischen tierischer Häute anfallenden organischen Abfallprodukten.

Bei der Lederherstellung werden Häute und Felle einer Reihe von Behandlungsschritten unterworfen, um eine gute Haltbarkeit und die erwünschten morphologischen und farblichen Eigenschaften zu erzielen. Im Folgenden wird beispielhaft die herkömmliche Verarbeitung und Zurichtung von Ledern bzw. Häuten beschrieben, die im Übrigen in weiten Teilen mit der Verarbeitung und Zurichtung von Fellen übereinstimmt. Im Unterschied zur Lederherstellung, bei der ein Enthaarungsschritt erforderlich ist, muss freilich bei der Fellverarbeitung das Haarkleid erhalten bleiben.

Hauptaufgabe der verschiedenen Haut- bzw. Fellbehandlungsschritte ist es, einen Quellungszustand der Hautporen und der Haare zu erreichen, bei dem ein Eindringen von Gerbchemikalien und damit die Vernetzung und Verfestigung der Kollagenketten ermöglicht wird. Der Wasserverbrauch ist dabei sehr hoch; die Temperatur darf den Wert von 37°C grundsätzlich nicht übersteigen.

Die der eigentlichen Gerbung vorangehenden Behandlungsschritte umfassen eine Reihe von chemisch-physikalischen, enzymatischen und mechanischen Prozessen. Der erste Verarbeitungsschritt besteht in einer Weiche, mit der die Häute für die weitere Behandlung vorbereitet werden. Die Weiche wird zumeist mit kaltem Wasser, dem eine gewisse Menge Tenside zugesetzt sind, durchgeführt. Die Einwirkzeit beträgt 8 bis 24 Stunden. Das Massenverhältnis zwischen der Lösung, hier der Weichlösung, und den 6:1 und 12:1. Nach Beendigung der Weiche wird die mit den Häuten aus dem Weichbottich ausgetragene Flüssigkeit abzentrifugiert und fällt zusammen mit der zurückgebliebenen Weichlösung als Abwasser an.

Im nächsten Verfahrenschritt werden die Felle gewaschen. Dies erfolgt üblicherweise mit einer auf ca. 25-35 °C angewärmten Wasser/Tensidlösung, der geringe Mengen Salz zugesetzt sind. Durch den Salzzusatz und die erhöhte Temperatur wird eine leichte Quellung der Poren und der Keratinstruktur der Haare erreicht. Die Einwirkzeit und das Flottenverhältnis sind mit derjenigen bei der Weiche identisch. Nach Beendigung der Wäsche werden die Felle erneut zentrifugiert und mechanisch bearbeitet. Die Waschlösung fällt wiederum als Abwasser an.

Im nächsten Verfahrensschritt, der Kälkung, wird der Suspension Kalk (CaO) zugegeben, der mit Wasser zu Ca(OH)₂ reagiert. Ca(OH)₂, kann problemlos bei Kälkung und Enthaarung von Häuten eingesetzt werden, da es die Kollagenfasern der Häute nicht wesentlich beschädigt. Die Zugabe von Ca(OH)₂ bewirkt einen Anstieg des pH-Wertes auf pH=12,4 bis pH=12,5. Gleichzeitig oder im Anschluss an die Kälkung erfolgt bei der Lederherstellung die Enthaarung; bei der Fellbearbeitung steht an dieser Stelle der "Aufschluss", bei dem die Haare erhalten bleiben.

Die Kälkung führt zur Einlagerung von Wasser und damit zum Quellen des Fells bzw. der Haut. Um eine gleichmäßige Quellung zu erreichen, werden die Häute bzw. Felle für ca. 1 bis 2 Tage in der Kalksuspension belassen. Die Zugabe von NaSH, NaCN, NaOH, Na₂(CO)₃, proteolitischen Enzymen, Dimethylaminen etc. beschleunigt den Prozess.

Nachfolgend schließt sich der Schritt der "Entfleischung" der geäscherten und ggf. enthaarten, nunmehr als "Blöße" bezeichneten Haut an. Beim Entfleischen wird das Unterhautbindegewebe mechanisch von den Blößen entfernt. Die entfleischte Blöße wird anschließend beschnitten; Schwanzwurzel, Bauchnabe, Knischeiben und andere nicht gewünschte Hautteile werden dabei entfernt. Die von der Haut bzw. dem Fell abgetrennten Teile werden als so genanntes "Schabfleisch" abgesondert. Die entfleischten Häute werden anschließend der Gerbung zugeführt, in der die Häute in mehreren Verarbeitungsschritten haltbar gemacht werden.

Das Schabfleisch wurde früher zu Leim, Gelatine, Photogelatine, Salben oder Ölemulsionen weiterverarbeitet. Dieser Verwertungsweg insbesondere die Leim- und Gelatinegewinnung wird heute eher selten beschritten; in der Regel erfolgt heute eine Weiterverwertung dieser Abfälle, beispielsweise als Ausgangsmaterial für Dünger oder Fleischmehl, oder aber die Abfälle werden verbrannt.

Das beim Entfleischen anfallende Schabfleisch enthält aufgrund der vorangegangenen Verfahrensschritte einen hohen Wasseranteil von 75% bis 87%. Die verbleibende Menge an 13% bis 25% Trockensubstanz enthält 35% bis 60% Proteine, 10% bis 35% Fette, 10% bis 14% Polysaccharide und 5% bis 7% Asche; letztere umfasst zu einem nicht unbedeutenden Anteil verschiedene Salze wie Na₂SO₄, NaCl und Ca(OH)₂. Der im Schabfleisch vorhandene Wasseranteil ist im Wesentlichen in den proteinhaltigen, in der alkalischen Umgebung stark gequollenen Fasen des Schabfleisches gebunden. Auch durch eine starke Pressung des Schabfleisches ist es nicht möglich, den Wasseranteil im Schabfleisch deutlich zu verringern. Der hohe Wasseranteil erhöht jedoch die Menge des Abfalls bei der Lederherstellung beträchtlich und ist überdies bei der Weiterverwertung bzw. Verbrennung der Abfälle hinderlich.

Die GB 1 042 559 A und die CA 1116765 A beschreiben Verfahren, bei denen zur Entwässerung einer Reststoffsuspension zwecks Senkung des pH-Wertes Säure zugeführt wird. Dabei kommen starke Säuren wie Salzsäure, Schwefelsäure oder Salpetersäure zum Einsatz. Dadurch kommt es jedoch zu einem raschen Abfall des pH-Werts, mit der Folge einer nachteiligen, das Eiweiß denaturierenden Wärmeentwicklung.

Gegenstand der GB 1 313 550 A1 ist ein Verfahren zur Behandlung von in der Lebensmittelindustrie, insbesondere bei der Fischverarbeitung, anfallendem Schmutzwasser mit dem Ziel, den biochemischen Sauerstoffbedarf (BOD) des Schmutzwassers zu senken und zugleich einen großen Teil der darin enthaltenen Eiweißstoffe zurückzugewinnen. Im Verlauf des Verfahrens wird dem Schmutzwasser Kohlendioxid zugeführt, um den pH-Wert zu senken; eine Entwässerung ist damit jedoch nicht verbunden.

In der JP 55013046 A wird ein Verfahren beschrieben, bei dem Schmutzwasser, das bei der Herstellung von Fleischprodukten anfallendem Abwasser mit Säure sowie einem Eiweißkoagulans behandelt wird, um einen eiweißhaltigen Schlamm zu erzeugen. Der Schlamm kann anschließend zur Erzeugung eines Lebensmittels oder als Tierfutter eingesetzt werden. In dieser Druckschrift wird jedoch ebenfalls kein Verfahrensschritt zur Entwässerung des anfallenden Schlammes beschrieben.

Aufgabe der Erfindung ist somit, einen Weg zur effektiveren Entwässerung der Abfallprodukte bei der Leder- und Pelzherstellung, insbesondere zur Entwässerung der Abfallprodukte der Entfleischung anzugeben.

Gelöst ist diese Aufgabe durch ein Verfahren zum Entwässern von Gerbereiabfällen, bei dem bei der Leder- oder Pelzherstellung anfallende organische und anorganische Abfallstoffe in einer wässrigen, alkalischen Suspension gesammelt und der pH-Wert der Suspension durch Zugabe von Kohlendioxid gesenkt wird und die dadurch gekennzeichnet ist, dass die mit dem Kohlendioxid beladene Suspension unter Druck gehalten wird.

Die Zugabe von Kohlendioxid führt zu einer Senkung des pH-Werts der Suspension. Durch die Senkung des pH-Werts werden die Bindungen zwischen den organischen Fasern der Abfallstoffe und dem Wasser zumindest teilweise aufgebrochen, wodurch Wasser freigesetzt wird. Die Senkung des pH-Wertes erfolgt beim Einsatz von Kohlendioxid oder einer vergleichbaren schwachen Säure - im Gegensatz zum Einsatz einer starken mineralischen Säure wie beispielsweise Schwefelsäure -nur langsam. Die bei der Versäuerung entstehende Wärme kann somit leicht abgeführt werden und führt nicht zu einer Überhitzung und damit zu einer Denaturierung der Einweißbestandteile im Schabfleisch. Das erfindungsgemäße Verfahren eignet sich besonders zur Behandlung von Abfallstoffen, die bei der Entfleischung von Häuten oder Fellen entstehen, insbesondere dann, wenn die Entfleischung erst im Anschluss an die Äschung erfolgt ("limed fleshings"). Durch den Einsatz des erfindungsgemäßen Verfahrens kann der Wasseranteil der bei der Lederherstellung anfallenden organischen Abfallstoffe (Schabfleisch) um bis zu 30% gesenkt werden. Zugleich wird der Fettanteil um bis zu 15% reduziert. Das freigesetzte Wasser sowie das freigesetzte Fett werden aus der Suspension mit üblichen mechanischen Verfahren (Sieben, Pressen) von den übrigen Abfallstoffen entfernt und steht ggf. für eine erneute Verwertung zur Verfügung. Die verbleibende Trockensubstanz eignet sich in besonderer Weise als Ausgangsmaterial für die Herstellung von Dünger oder Fleischmehl.

Vorteilhafterweise wird durch die Kohlendioxidbehandlung der pH-Wert der Suspension auf einen Wert gesenkt, der gleich oder niedriger liegt als der isoelektrische Punkt der Suspension. Am isoelektrischen Punkt brechen die im Verlauf der vorangegangenen Bearbeitungsschritte entstandenen Hydrat-Bindungen zwischen den in den Abfallstoffen enthaltenen Gewebefasern und Wasser zumindest teilweise auf und Wasser wird frei.

Bevorzugt wird der pH-Wert auf einen Wert unter pH=7,3 gesenkt, vorzugsweise unter pH=6.

Das Kohlendioxid wird in einer bevorzugten Ausgestaltung der Erfindung unter Druck in flüssiger Form in die Suspension eingetragen und entspannt in der Suspension. Beim Entspannen entstehen Gasbläschen in der Suspension, deren insgesamt große Oberfläche die Lösung des Kohlendioxids in der Flüssigkeit begünstigt. Alternativ oder ergänzend dazu wird das Kohlendioxid in Gasform in die Suspension eingetragen. Hierzu eignen sich besonders Blaslanzen, mittels denen das Kohlendioxid unter Druck in die Suspension gepresst wird, oder eine Einperlvorrichtung, mittels der das Kohlendioxidgas von in Form langsam aufsteigender Gasbläschen in die Suspension eingebracht wird.

Um die Lösung des Kohlendioxids im Wasser zu beschleunigen ist es vorteilhaft, dass die mit dem Kohlendioxid beladene Suspension unter Druck gehalten wird und/oder im Verlauf der Behandlung unter Druck gesetzt wird.

Eine vorteilhafte Ausgestaltung der Erfindung sieht vor, die Abfallstoffe vor und/oder nach der Kohlendioxidbehandlung mechanisch zu zerkleinern, insbesondere zu mahlen. Durch die Zerkleinerung vor der Kohlendioxidbehandlung werden grobkörnige Bestandteile und lange Fasern aufgebrochen und die anschließende Versäuerung dadurch begünstigt. Die Zerkleinerung im Anschluss an die Kohlendioxidbehandlung erleichtert die Weiterverarbeitung des Schabfleisches, insbesondere zu Fleischmehl.

Zur Durchführung des erfindungsgemäßen Verfahrens eignet sich eine Vorrichtung zum Entwässern von bei der Lederherstellung anfallenden Abfallstoffen, die einen zur Aufnahme einer die Abfallstoffe enthaltenden, wässerigen, alkalischen Suspension bestimmten, druckfest ausgebildeten Prozessreaktor, der mit einer Zuführung für Kohlendioxid im flüssigen, gasförmigen oder gelösten Zustand ausgerüstet ist, eine Steuereinheit zum Regeln der Menge an zuzuführendem Kohlendioxid und des Drucks im Prozessreaktor und eine mechanische Entwässerungseinheit zum Entfernen des im Prozessreaktor chemisch von den Abfallstoffen getrennten Wassers umfasst.

Als Einrichtung zum Zuführen des Kohlendioxids eignet sich insbesondere ein Injektor zum direkten Zuführen des Kohlendioxids in den Prozessreaktor, wie etwa eine Lanze zum Eindüsen des Kohlendioxids in flüssigem oder gasförmigem Zustand oder eine Einperlvorrichtung, wie beispielsweise eine Fritte oder ein mit kleinen Öffnungen versehenes Eintragrohr.

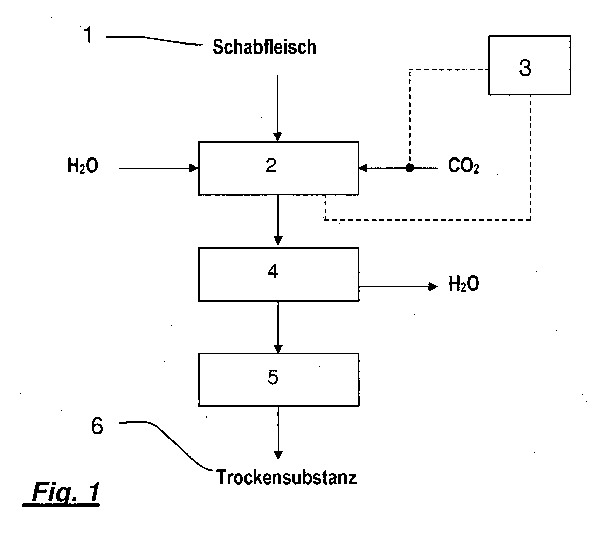

Anhand der Zeichnung wird das erfindungsgemäße Verfahren erläutert. Die einzige Zeichnung (Fig. 1) zeigt schematisch einen erfindungsgemäßen Verfahrensablauf.

Im Ausführungsbeispiel wird als Ausgangsmaterial 1 Schabfteisch genommen, das bei der Entfleischung einer zur Lederherstellung zuzurichtenden Haut oder eines zur Pelzherstellung zuzurichtenden Fells in einer Entfleischungsmaschine als Abfallprodukt anfällt. Bevorzugt folgt die Entfleischung einem Äscherprozess. Bei dem dabei anfallenden Schabfleisch ("Limed fleshing") handelt es sich um überwiegend aus Fetten und Proteinen bestehendes Material, das aufgrund der alkalischen Vorbehandlung stark gequollen ist und somit einen hohen Wasseranteil von bis zu 87% enthält.

Das Ausgangsmaterial 1 wird einem um eine horizontale Achse drehbar gelagerten, druckfesten Prozessreaktor 2 zugeführt, in dem der Verfahrensschritt der Absäuerung vollzogen wird. Dazu werden in den Prozessreaktor 2 Wasser und Kohlendioxid zugegeben. Das Kohlendioxid kann auch zuvor im Wasser gelöst und das auf diese Weise versetzte Wasser dem Prozessreaktor 2 zugeführt werden. Die sich bildende Suspension wird während der Behandlung ständig bewegt, beispielsweise durch Rotation des Prozessreaktors 2 um seine horizontale Achse. Das Kohlendioxid wird sukzessive im Verlauf mehrerer Stunden in flüssiger oder gasförmiger Form zugeführt und löst sich im Wasser. Als Eintrageinrichtung dient dabei eine Blaslanze, mittels der das Kohlendioxid unter Druck in die Suspension eingeführt wird, oder ein mit kleinen Öffnungen versehenes Eintragsrohr, durch die das Kohlendioxid in Form kleiner Gasperlen in der Suspension aufstiegt. Nicht gelöstes Kohlendioxid wird über eine Absaugeinrichtung entfernt. Durch die Zuführung des Kohlendioxids sinkt der pH-Wert der Suspension von ursprünglich pH=11 bis pH=12 oder mehr auf einen Wert zwischen pH=6 und pH=8 ab. Durch die PH-Absenkung brechen die Hydrat-Bindungen des gequollenen Schabfleisches zumindest teilweise auf und Wasser wird freigesetzt. Während der Zuführung des Kohlendioxids wird die sich bildende Suspension unter Druck von beispielsweise 3 bar gehalten; im Laufe der Behandlung kann der Druck auch sukzessive auf beispielsweise 5 bar erhöht werden, um die Löslichkeit des Kohlendioxids zu steigern. Der Druck im Innern des Prozessreaktors 2 sowie der Zufluss von Kohlendioxid kann während der Behandlung mittels einer Kontrolleinheit 3 laufend in Abhängigkeit von bestimmten Prozessparametern, beispielsweise vom pH-Wert oder der Temperatur der im Innern des Prozessreaktors 2 vorliegenden Suspension, geregelt werden.

Das sich bei der Kohlendioxidbehandlung ergebende Zwischenprodukt wird einer mechanischen Entwässerungseinheit 4 zugeführt, in der das durch die Wirkung des Kohlendioxids freigesetzte Wasser mechanisch, beispielsweise durch Sieben, Filtern, Pressen, vom Schabfleisch getrennt wird. Zugleich mit dem Wasser wird auch in erheblichem Umfang Fett freigesetzt, das gleichfalls vom Schabfleisch und vom Wasser getrennt wird und einer weiteren Verwendung zugeführt werden kann. Das entwässerte Material kann anschließend in einer Mahleinheit 5 zerkleinert werden. Bereits nach einer Behandlungsdauer von ca. 16h weist die sich ergebende Trockensubstanz 6 einen um bis zu 30% geringeren Wassergehalt auf als lediglich auf mechanischem Wege entwässertes Ausgangsmaterial 1. Die Trockensubstanz 6 wird anschließend einer weiteren Verwendung zugeführt; beispielsweise eignet es sich als Ausgangsprodukt zur Herstellung von Dünger oder Fleischmehl.

### Bezugszeichenliste

- 1.: Ausgangsprodukt
- 2.: Prozessreaktor
- 3.: Steuereinheit
- 4.: Mechanische Entwässerungseinheit
- 5.: Mahleinheit
- 6.: Trockensubstanz

## Patentansprüche

1. Verfahren zum Entwässern von bei der Leder- oder Pelzherstellung anfallenden Abfallstoffen, insbesondere von Schabfleisch, bei dem bei der Leder- oder Pelzherstellung anfallende organische und anorganische Abfallstoffe in einer wässrigen, alkalischen Suspension gesammelt und der pH-Wert der Suspension durch sukzessive Zugabe von Kohlendioxid, gesenkt wird,
**dadurch gekennzeichnet,**
**dass** die Suspension während der Zuführung des Kohlendioxids unter Druck gehalten wird.

2. Verfahren nach Anspruch 1, **dadurch gekennzeichnet, dass** der Druck der Suspension während der Behandlung in Anhängigkeit von bestimmten Prozessparameten, wie pH-Wert oder Temperatur der Suspension, geregelt wird.

3. Verfahren nach Anspruch 1 oder 2, **dadurch gekennzeichnet, dass** der Druck der Suspension während der Behandlung zwischen 3 und 5 bar beträgt.

4. Verfahren nach einem der vorhergehenden Ansprüche, **dadurch gekennzeichnet, dass** der pH-Wert der Suspension auf einen Wert gesenkt wird, der gleich oder niedriger liegt als der isoelektrische Punkt der Suspension.

5. Verfahren nach einem der vorhergehenden Ansprüche, **dadurch gekennzeichnet, dass** der pH-Wert auf einen Wert unter pH=7,3, vorzugsweise unter pH=6 gesenkt wird.

6. Verfahren nach einem der vorhergehenden Ansprüche, **dadurch gekennzeichnet, dass** das Kohlendioxid unter Druck in flüssiger Form oder gasförmig in die Suspension eingetragen wird.

7. Verfahren nach einem der vorhergehenden Ansprüche, **dadurch gekennzeichnet, dass** die Abfallstoffe vor und/oder nach der Kohlendioxidbehandlung gemahlen werden.

## Claims

1. Method for removing water from wastes generated in leather or fur production, especially from fleshings, wherein the organic and inorganic wastes generated in leather or fur production are collected in an aqueous alkaline suspension and the pH of the suspension is lowered by gradual addition of carbon dioxide,
**characterized in that**
the suspension is maintained under pressure during the carbon dioxide feed.

2. Method according to Claim 1, **characterized in that** the pressure on the suspension is controlled during the treatment as a function of certain process parameters, such as suspension pH or temperature.

3. Method according to Claim 1 or 2, **characterized in that** the pressure on the suspension during the treatment is between 3 and 5 bar.

4. Method according to any preceding claim, **characterized in that** the suspension pH is lowered to a value which is equal to or lower than the isoelectric point of the suspension.

5. Method according to any preceding claim, **characterized in that** the pH is lowered to a value below pH 7.3, preferably below pH 6.

6. Method according to any preceding claim, **characterized in that** the carbon dioxide is under pressure while being introduced into the suspension in liquid or gaseous form.

7. Method according to any preceding claim, **characterized in that** the wastes are ground before and/or after the carbon dioxide treatment.

## Revendications

1. Procédé de déshydratation de déchets formés lors de la fabrication de cuirs ou de peaux, notamment de carnasses, selon lequel les déchets organiques et inorganiques formés pendant la fabrication de cuirs ou de peaux sont recueillis dans une suspension alcaline aqueuse et le pH de la suspension est abaissé par ajout successif de dioxyde de carbone,
**caractérisé en ce que**
la suspension est maintenue sous pression pendant l'introduction du dioxyde de carbone.

2. Procédé selon la revendication 1, **caractérisé en ce que** la pression de la suspension est ajustée pendant le traitement en fonction de paramètres de procédé déterminés, tels que le pH ou la température de la suspension.

3. Procédé selon la revendication 1 ou 2, **caractérisé en ce que** la pression de la suspension pendant le traitement est comprise entre 3 et 5 bar.

4. Procédé selon l'une quelconque des revendications précédentes, **caractérisé en ce que** le pH de la suspension est abaissé à une valeur inférieure ou égale au point isoélectrique de la suspension.

5. Procédé selon l'une quelconque des revendications précédentes, **caractérisé en ce que** le pH est abaissé à une valeur inférieure à pH = 7,3, de préférence inférieure à pH = 6.

6. Procédé selon l'une quelconque des revendications précédentes, **caractérisé en ce que** le dioxyde de carbone est introduit sous pression sous forme liquide ou gazeuse dans la suspension.

7. Procédé selon l'une quelconque des revendications précédentes, **caractérisé en ce que** les déchets sont broyés avant et/ou après le traitement au dioxyde de carbone.
